Europäisches Patentamt

(19) **European Patent Office**

**Office européen des brevets**

(11) Numéro de publication: **0 120 787**
**B1**

(12) **FASCICULE DE BREVET EUROPÉEN**

(45) Date de publication du fascicule du brevet:
**08.04.87**

(21) Numéro de dépôt: **84400596.7**

(22) Date de dépôt: **23.03.84**

(51) Int. Cl.⁴: **H 01 B 19/00,** B 29 C 45/14,
H 01 B 17/32

(54) Procédé de moulage du revêtement isolant d'un isolateur électrique organique de grande longueur.

(30) Priorité: **25.03.83 FR 8304914**

(43) Date de publication de la demande:
**03.10.84 Bulletin 84/40**

(45) Mention de la délivrance du brevet:
**08.04.87 Bulletin 87/15**

(84) Etats contractants désignés:
**AT BE CH DE FR GB IT LI LU NL SE**

(56) Documents cité:
**FR-A-931 188**
**FR-A-2 399 105**
**GB-A-599 570**
**GB-A-618 078**
**US-A-2 361 348**
**US-A-3 068 522**
**US-A-3 259 680**

(73) Titulaire: **CERAVER Société anonyme dite:, 12, rue de la Baume, F-75008 Paris (FR)**

(72) Inventeur: **Kaczerginski, Alexandre, 7, rue Descartes, F-03700 Bellerive sur Allier (FR)**

(74) Mandataire: **Weinmiller, Jürgen, Lennéstrasse 9 Postfach 24, D-8133 Feldafing (DE)**

EP 0 120 787 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de moulage du revêtement isolant d'un isolateur électrique organique de grande longueur. Un tel isolateur comprend un élément isolant central, tel un jonc plein ou creux, dont les extrémités sont munies de ferrures.

Le jonc central est en matériau stratifié constitué de fibres enrobées de résine, et il est recouvert d'un revêtement isolant en forme de gaine généralement munie d'ailettes. Le matérieu de ce revêtement est un élastomère vulcanisant à chaud du genre EPM, EPDM, caoutchoucs silicones, polyuréthanes ou analogue, éventuellement muni de charges minérales (alumine, silice, etc...).

L'invention se rapporte en particulier aux isolateurs de longueur supérieure à 0,50 mètre et pouvant aller jusqu'à deux ou trois mètres. Si l'on dispose un jonc de cette longueur dans un moule et que l'on injecte l'élastomère sous une pression pouvant aller jusqu'à 500 bars, on observe un fléchissement du jonc sous l'effet de la pression de la matière et des différents flux de remplissage de l'empreinte du moule. Ceci entraîne des variations importantes de l'épaisseur du revêtement d'un bout à l'autre du jonc. Pour assurer une épaisseur minimale du revêtement du jonc sur toute la longueur du jonc, une solution serait d'accroître notablement la quantité d'élastomère injectée. Mais cela présente des inconvénients: augmentation du poids de l'isolateur, du temps de vulcanisation et du coût.

On s'est donc orienté vers une autre solution consistant à maintenir en place le jonc dans le moule pendant l'opération d'injection.

On connaît par le brevet GB-A- 599 570 un procédé et un dispositif de moulage par injection d'un revêtement isolant sur un insert métallique en forme de broche très mince. Le matériau du revêtement est thermoplastique, autrement dit il est chauffé jusqu'à son point de ramollissement ou de fusion et il est injecté dans un moule froid.

Il est prévu dans le moule une série de tiges très minces qui maintiennent l'insert métallique en place pendant tout le remplissage du moule par la matière thermoplastique et qui sont escamotées automatiquement quand le moule est complètement rempli.

Dans le cas de l'isolateur organique, le problème posé est beaucoup plus complexe. D'abord le jonc a un module d'élasticité quatre à cinq fois plus faible que l'insert métallique précité. Il a donc tendance à fléchir davantage que l'insert métallique. Par ailleurs, pour que le revêtement en élastomère présente une adhérence parfaite sur la surface du jonc, il est nécessaire de traiter le jonc préalablement à l'injection avec des agents d'adhérisation, ce qui n'est pas le cas avec un insert métallique.

En outre la matière du revêtement vulcanise à chaud, ce qui implique qu'elle soit injectée à une température moyenne de l'ordre de 100°C dans un moule chaud dont la température est de l'ordre de 180°C à 200°C.

Si la disposition du brevet anglais précité était mise en oeuvre, on aurait donc des supports métalliques à la température du moule qui viendraient en contact avec les agents d'adhérisation à la surface du jonc et les dégraderaient aussitôt. Ceci entraînerait des défauts d'adhérisation du revêtement sur le jonc, tout à fait inacceptables en particulier pour des isolateurs moyenne et haute tension.

On connaît per ailleurs du document FR-A-2 399 105 un procédé de fabrication d'un isolateur composé d'un jonc central en matériau composite et d'un revêtement à ailettes en matériau synthétique. Ce revêtement est appliqué sur le jonc par surmoulage et peut être constitué d'une couche mince intérieure à épaisseur constante et d'un surmoulage extérieur comportant les ailettes.

L'invention a pour but de proposer un procédé de moulage du revêtement isolant d'un isolateur électrique organique comprenant un jonc central en matérieu composite muni superficiellement d'agents d'adhérisation, ce procédé évitent la dégradation de la couche d'agent d'adhérisation per les supports escamotables.

Ce but est atteint per le procédé tel qu'il est caractérisé dans la revendication 1.

En ce qui concerne des exemples préférés de mise en oeuvre de l'invention, référence est faite aux sous-revendications.

L'invention sera décrite ci-après plus en détail à l'aide de plusieurs exemples de réalisation et des dessins.

Dans le dessin annexé:
- la figure 1 montre très schématiquement en coupe longitudinale un moule permettant la mise en oeuvre du procédé selon l'invention,
- les figures 2 et 3 montrent très schématiquement en perspective deux variantes de manchons de protection pour le jonc apparaissant dans la figure 1,
- les figures 4 et 5 montrent en coupe transversale un exemple de moule au niveau d'un support escamotable, respectivement avant et après la fin de l'injection.

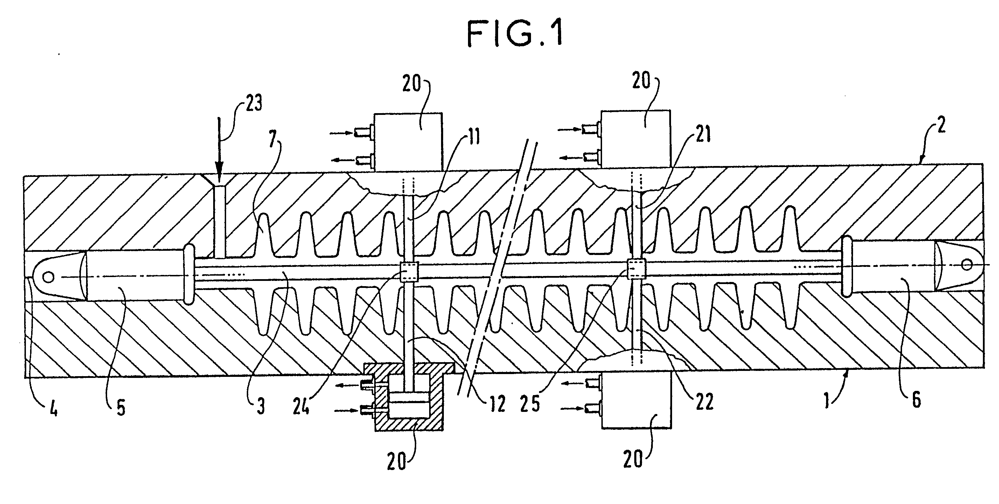

On voit dans la figure 1 un moule en deux parties 1 et 2 et son plan de joint 4. Un jonc 3 muni de ses ferrures 5 et 6 est disposé dans ce moule. On a référencé 7 l'empreinte du revêtement à ailettes du jonc 3. Des paires de supports escamotables 11, 12 et 21, 22 sont prévues régulièrement le long du jonc 3; elles sont associées à des vérins 20 commandés automatiquement par la machine d'injection du matériau, par exemple de l'EPDM, destiné à former le revêtement à ailettes du jonc 3. La commande des vérins 20 pourrait également être effectuée par l'intermédiaire d'un capteur de pression en contact avec la matiére dans le moule.

La flèche 23 illustre très schématiquement l'introduction sous pression du matériau dans un canal d'injection vers l'empreinte 7.

Le jonc 3 est muni superficiellement d'agents d'adhérisation et présente au niveau de ses surfaces d'appui avec les supports 11, 12, 21, 22, des manchons de protection 24, 25 en élastomère de formule compatible avec le matériau du revêtement à ailettes. Leur épeisseur est inférieure à l'épaisseur finale de ce revêtement aux endroits où ils sont situes.

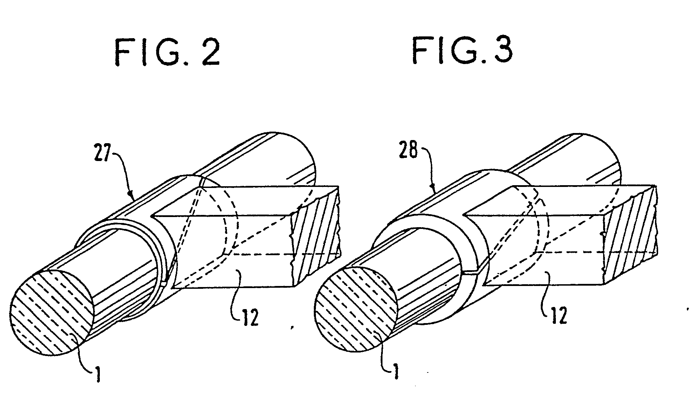

Les figures 2 et 3 montrent deux exemples de manchons intercalés entre le support 12 et le jonc 1.

Le manchon 27 est obtenu par spiralage d'un ruban en élastomère, tandis que le manchon 25 est formé par une bague fendue.

Toute autre forme de réalisation peut être envisagée, par exemple un anneau fermé, largement dilaté avant d'être enfilé sur le jonc pour ne pas abîmer les agents d'adhérisation puis rétreint sur le jonc.

L'élastomère de ces manchons peut être à l'état cru ou partiellement vulcanisé, ou à l'état vulcanisé; ce dernier état confère aux manchons une meilleure tenue mécanique leur permettant notamment de mieux résister aux efforts que leur impriment les flux d'injection. Qu'ils soient vulcanisés ou non, ces manchons comportent des sites actifs qui permettent d'assurer ultérieurement une liaison tout à fait satisfaisante avec le revêtement injecté.

Selon une autre variante, les manchons sont moulés in situ sur le jonc et sont alors dans un état vulcanisé ou semi-vulcanisé.

Dans tous les cas, lorsque l'on arrive en fin d'injection, les paires de support sont escamotées jusqu'aux bords de l'empreinte 7, et complètent cette empreinte. Grâce à la pression exercée par le matériau injecté, les espaces libérés par les supports vont être remplis instantanément, le revêtement est complet et la vulcanisation s'opère. la fin de la réticulation, les manchons adhèrent parfaitement au jonc et la revêtement adhère parfaitement au jonc et aux manchons.

On imagine aisément que le manchon apparaissant dans la figure 3 puisse être remplacé par un manchon métallique; afin de ne pas abîmer les agents d'adhérisation du jonc, il est préférable de sertir deux demi-bagues métalliques ou de réaliser, préalablement à l'application de ces agents, des manchons par des dépôts métalliques annulaires.

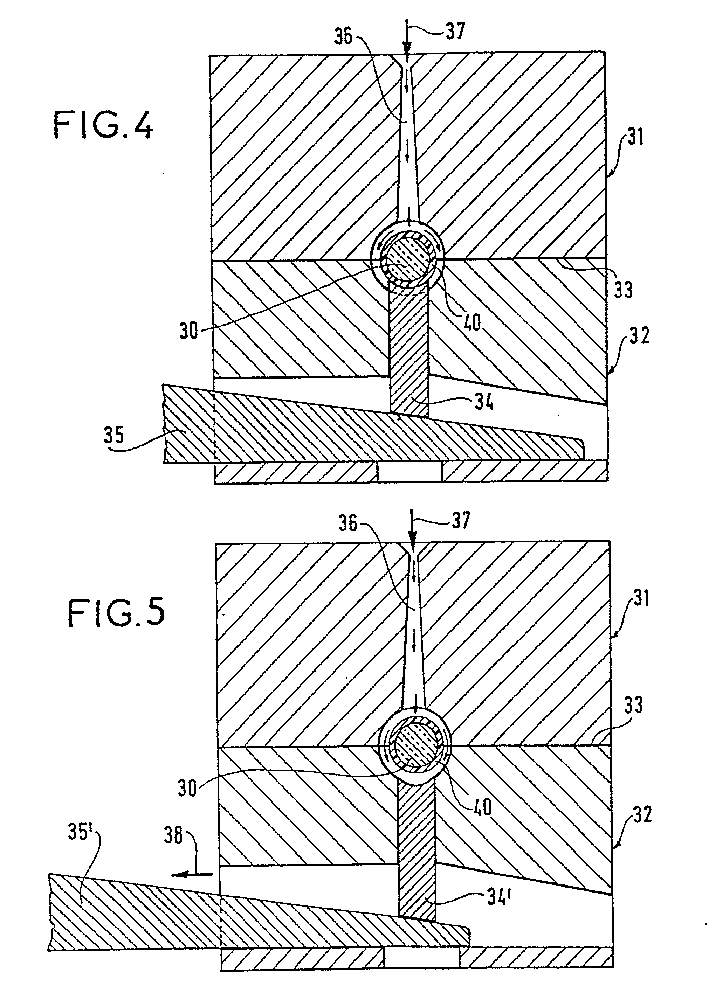

Dans les figures 4 et 5 on voit en coupe transversale un mode de réalisation permettant l'escamotage des supports.

Un jonc 30 est disposé dans un moule en deux parties 31 et 32 dont le plan de joint est référencé 33. Des supports 34, formant berceau pour le jonc, sont disposés régulièrement; la face d'appui supérieure est séparée de la surface du jonc par un manchon 40; la face d'appui inférieure inclinée de chaque support 34 coopère avec une pièce en coin 35 susceptible d'être animée d'un mouvement de translation (schématisé par la flèche 38 dans la figure 5).

Dans le plan de figure est situé un canal d'injection 36 pour le flux 37, situé sensiblement dans le prolongement du support 34. Une telle disposition permet au flux 37 de s'équilibrer régulièrement autour du jonc.

On voit sur la figure 5 l'escamotage du support 34, qui devient 34' après translation du coin 35, qui devient 35'.

Selon une variante non illustrée, mais qui peut être imaginée aisément à partir des figures 1 à 3, les différents manchons protecteurs en élastomère sont reliés entre eux de manière à former une gaine unitaire. Tout ce qui a été dit plus haut à propos de la nature du matériau des manchons, de leur état de vulcanisation et de leur épaisseur est valable pour le matériau d'une gaine continue. Cette dernière toutefois peut être réalisée directement sur le jonc par moulage ou par extrusion, ou être rapportée sur le jonc.

Bien entendu, l'invention n'est pas limitée aux modes de réalisation qui viennent d'être décrits. En particulier, il n'est pas impératif que les canaux d'injection se trouvent dans les mêmes plans transversaux que les supports du jonc. Mais la répartition des supports le long du jonc devra toujours permettre un équilibrage des efforts sur le jonc pour que sa flexion soit toujours inférieure aux tolérances de fabrication.

Le jonc peut être disposé dans le moule avec ses ferrures d'extrémité et l'on obtient un isolateur complet, immédiatement après le moulage. Selon une autre variante les ferrures d'extrémité sont solidarisées ultérieurement par tout moyen connu de scellement ou de manchonnage.

**Revendications**

1/ Procédé de moulage du revêtement isolant (7) d'un isolateur électrique organique comprenant un jonc central (3) en matériau composite muni superficiellement d'agents d'adhérisation, ledit revêtement isolant étant en un matériau élastomère vulcanisé à chaud, procédé selon lequel on prévoit dans le moule (1, 2) des supports escamotables (11, 12, 21, 22, 34) pour ledit jonc, caractérisé par le fait que l'on munit ledit jonc, au moins au niveau des surfaces d'appui contre lesdits supports de manchons protecteurs (24, 25, 27, 28, 40) dont l'épaisseur est inférieure à celle dudit revêtement, que l'on réalise ensuite l'injection du matériau dudit revêtement et qu'en fin d'injection, avant la vulcanisation dudit revêtement, on escamote lesdits supports.

2/ Procédé de moulage selon la revendication 1, caractérisé par le fait que le matériau dudit revêtement (7) et celui desdits manchons (24, 25, 27, 28, 40) sont choisis dans le groupe formé par les élastomères vulcanisant à chaud tels que l'EPM, l'EPDM, les caoutchoucs silicones, les polyuréthanes.

3/ Procédé de moulage selon la revendication 2, caractérisé par le fait que lesdits manchons (24, 25, 27, 28, 40) sont placés sur le jonc à l'état non vulcanisé.

4/ Procédé de moulage selon l'une des revendications 2 à 3, caractérisé par le fait que, pour réaliser lesdits manchons (27), on spirale des rubans en élastomère autour du jonc (Fig. 2)

5/ Procédé de moulage selon l'une des revendications 2 à 3, caractérisé par le fait que, pour réaliser lesdits manchons (28), on met en oeuvre des bagues fendues en élastomère (Fig. 3).

6/ Procédé de moulage selon l'une des revendications 2 à 3, caractérisé par le fait que l'on enfile lesdits manchons (24, 25) sur le jonc (3) en les élargissant préalablement.

7/ Procédé de moulage selon l'une des revendications 2 à 3, caractérisé par le fait que lesdits manchons (24, 25) sont moulés in situ sur le jonc (3).

8/ Procédé de moulage selon l'une des revendications 2 à 3, caractérisé par le fait que lesdits manchons sont réunis de manière à former une gaine unitaire sur le jonc.

9/ Procédé de moulage selon la revendication 8, caractérisé par le fait que ladite gaine est obtenue par un procédé choisi parmi l'extrusion directe, le moulage direct, l'entringlage.

10/ Procédé de moulage selon la revendication 1, caractérisé par le fait que le matériau des manchons (24, 25, 27, 28, 40) est un métal.

11/ Procédé de moulage selon la revendication 10, caractérisé par le fait que lesdits manchons sont constitués par des demi-bagues serties sur le jonc.

12/ Procédé de moulage selon la revendication 10, caractérisé par le fait que, préalablement à l'enduction du jonc par les agents d'adhérisation, on réalise lesdits manchons par un procédé choisi parmi l'électro-déposition et la métallisation sous vide.

13/ Procédé selon l'une des revendications précédentes, caractérisé par le fait que les positions des canaux d'injection du matériau dudit revêtement sont choisies vis-à-vis de celles des supports escamotables pour assurer une répartition équilibrée dudit matériau autour dudit jonc.

14/ Procédé selon la revendication 13, caractérisé par le fait que l'on prévoit des canaux d'injection (36) situés sensiblement dans les mêmes plans transversaux du moule que lesdits supports escamotables.

15/ Procédé selon la revendication 13, caractérisé par le fait que l'on prévoit un canal d'injection (36) et un support (34) situés dans le prolongement l'un de l'autre de part et d'autre dudit jonc (3).

16/ Procédé selon la revendication 13, caractérisé par le fait que l'on prévoit un canal d'injection orthogonal à deux supports opposés situés de part et d'autre dudit jonc.

**Patentansprüche**

1. Verfahren zum Gießen der isolierenden Hülle (7) eines organischen elektrischen Isolators mit einem zentralen Stab (3) aus Verbundmaterial, der an der Oberfläche mit Haftmitteln versehen ist, wobei die isolierende Hülle aus einem heißvulkanisierten Elastomermaterial besteht und gemäß dem Verfahren in der Gießform (1, 2) entfernbare Stützen (11, 12, 21, 22, 34) für den Stab vorgesehen werden, dadurch gekennzeichnet, daß man den Stab zumindest in Höhe der Kontaktflächen mit den Stützen mit Schutzmuffen (24, 25, 27, 28, 40) versieht, deren Dicke geringer ist als die der Hülle, daß man dann das Einspritzen des Materials der Hülle durchführt und am Ende des Einspritzens, vor der Vulkanisierung der Hülle, die Stützen abzieht.

2. Gießverfahren nach Anspruch 1, dadurch gekennzeichnet, daß das Material der Hülle (7) und das der Muffen (24, 25, 27, 28, 40) aus der Gruppe ausgewählt werden, die von den heißvulkanisierenden Elastomeren gebildet wird, wie z.B. das EPM, EPDM, Silikongummis, Polyurethane.

3. Gießverfahren nach Anspruch 2, dadurch gekennzeichnet, daß die Muffen (24, 25, 27, 28, 40) in nicht vulkanisiertem Zustand auf den Stab gebracht werden.

4. Gießverfahren nach einem der Ansprüche 2 bis 3, dadurch gekennzeichnet, daß man zur Herstellung der Muffen (27) Elastomerbänder um den Stab herumwickelt (Fig. 2).

5. Gießverfahren nach einem der Ansprüche 2 bis 3, dadurch gekennzeichnet, daß man zur Herstellung der Muffen (28) geschlitzte Elastomerringe verwendet (Fig. 3).

6. Gießverfahren nach einem der Ansprüche 2 bis 3, dadurch gekennzeichnet, daß man die Muffen (24, 25) auf den Stab (3) aufschiebt, indem man sie vorher ausweitet.

7. Gießverfahren nach einem der Ansprüche 2 bis 3, dadurch gekennzeichnet, daß die Muffen (24, 25) in situ auf den Stab (3) aufgegossen werden.

8. Gießverfahren nach einem der Ansprüche 2 bis 3, dadurch gekennzeichnet, daß die Muffen so zusammengefügt sind, daß sie eine einzige Hülle auf dem Stab bilden.

9. Gießverfahren nach Anspruch 8, dadurch gekennzeichnet, daß die Muffenhülle nach einem Verfahren erhalten wird, das unter den direkten Extrusionsverfahren, den direkten Gießverfahren und den Aufschrumpfverfahren ausgewählt wird.

10. Gießverfahren nach Anspruch 1, dadurch gekennzeichnet, daß das Material der Muffen (24, 25, 27, 28, 40) ein Metall ist.

11. Gießverfahren nach Anspruch 10, dadurch gekennzeichnet, daß die Muffen aus Halbringen bestehen, die auf den Stab aufgepreßt sind.

12. Gießverfahren nach Anspruch 10, dadurch gekennzeichnet, daß vor dem Aufbringen der Haftmittel auf den Stab die Muffen durch ein Verfahren hergestellt werden, das aus den Verfahren der Elektroablagerung und der Vakuummetallisierung ausgewählt wird.

13. Verfahren nach einem der vorhergehenden Ansprüche, dadurch gekennzeichnet, daß die Positionen der Einspritzkanäle des Materials der Hülle gegenüber denen der entfernbaren Stützen gewählt werden, um eine ausgeglichene Verteilung des Materials um den Stab herum zu gewährleisten.

14. Verfahren nach Anspruch 13, dadurch gekennzeichnet, daß man Einspritzkanäle (36) vorsieht, die im wesentlichen in den gleichen Querebenen der Gießform wie die entfernbaren Stützen angeordnet sind.

15. Verfahren nach Anspruch 13, dadurch gekennzeichnet, daß man einen Einspritzkanal (36) und eine Stütze (34) vorsieht, die einer in der Verlängerung des anderen zu beiden Seiten des Stabs angeordnet sind.

16. Verfahren nach Anspruch 13, dadurch gekennzeichnet, daß man einen Einspritzkanal vorsieht, der senkrecht zu zwei einander entgegengesetzten, auf beiden Seiten des Stabs angeordneten Stützen liegt.

**Claims**

1. A method of molding the insulating covering (7) of an organic electrical insulator which includes a central rod (3) of composite material having adherization agents on its surface, said insulating covering being made of a hot vulcanized elastomer material, the method including the provision of retractable supports (11, 12, 21, 22, 34) for said rod in the mold (1, 2), characterized in that said rod is provided with protective sleeves (24, 25, 27, 28, 40) at least in the region of its surfaces bearing against said supports, the thickness of the sleeves being less than the thickness of said covering, that the material for said covering is then injected, and that said supports are retracted at the end of injection and prior to the vulcanization of said covering.

2. A molding method according to claim 1, characterized in that the materials of said covering (7) and of said sleeves (24, 25, 27, 28, 40) are chosen from the group constituted by hot-vulcanizable elastomers such as EPM, EPDM, silicone rubbers, and polyurethanes.

3. A molding method according to claim 2, characterized in that said sleeves (24, 25, 27, 28, 40) are placed on the rod in a non-vulcanized state.

4. A molding method according to one of claims 2 to 3, characterized in that said sleeves (27) are made by winding an elastomer tape round the rod (fig. 3).

5. A molding method according to one of claims 2 to 3, characterized in that said sleeves (28) are constituted by split rings of elastomer material (fig. 3).

6. A molding method according to one of claims 2 to 3, characterized in that said sleeves (24, 25) are threaded onto the rod (3) after having been widened.

7. A molding method according to one of claims 2 to 3, characterized in that said sleeves (24, 25) are molded in situ on the rod (3).

8. A molding method according to one of claims 2 to 3, characterized in that said sleeves are united in such a manner as to form a single sheath on the rod.

9. A molding method according to claim 8, characterized in that said sheath is obtained by a method chosen from direct extrusion, direct molding and direct sheathing.

10. A molding method according to claim 1, characterized in that the material of the sleeves (24, 25, 27, 28, 40) is a metal.

11. A molding method according to claim 10, characterized in that said sleeves are constituted by half-rings which are crimped to the rod.

12. A molding method according to claim 10, characterized in that prior to the coating of the rod by adherization agents, said sleeves are realized by a method chosen from electro-plating and vacuum metallization.

13. A method according to any one of the preceding claims, characterized in that the positions of the injection channels for the material of said covering are chosen facing those of the retractable supports to ensure that said material takes up a balanced distribution around said rod.

14. A method according to claim 13, characterized in that injection channels (36) are provided situated substantially in the same cross section planes through the mold as said retractable supports.

15. A method according to claim 13, characterized in that an injection channel (36) and a support (34) are provided situated in line with each other on either side of said rod (3).

16. A method according to claim 13, characterized in that an injection channel is provided orthogonally to two opposite supports situated on either side of said rod.

# FIG.1

0 120 787

# FIG. 2

# FIG. 3

FIG.4

FIG.5